Europäisches Patentamt

European Patent Office

Office européen des brevets

(19)

(11) Numéro de publication : **0 307 288 B1**

(12)

# FASCICULE DE BREVET EUROPEEN

(45) Date de publication du fascicule du brevet :
**10.07.91 Bulletin 91/28**

(51) Int. Cl.⁵ : **B64C 27/48,** F16B 5/02,
B29C 37/00

(21) Numéro de dépôt : **88402209.6**

(22) Date de dépôt : **01.09.88**

(54) **Dispositif d'attache à douilles, et pale de rotor munie d'un tel dispositif d'attache à un moyeu.**

(30) Priorité : **09.09.87 FR 8712529**

(43) Date de publication de la demande :
**15.03.89 Bulletin 89/11**

(45) Mention de la délivrance du brevet :
**10.07.91 Bulletin 91/28**

(84) Etats contractants désignés :
**DE ES GB IT**

(56) Documents cités :
**DE-C- 487 997**
**FR-A- 2 004 934**
**FR-A- 2 271 122**
**US-A- 3 603 626**
**US-A- 3 923 422**

(73) Titulaire : **AEROSPATIALE Société Nationale
Industrielle
37, Boulevard de Montmorency
F-75781 Paris Cédex 16 (FR)**

(72) Inventeur : **Bost, Michel
33, avenue des Platanes
F-94340 Joinville le Pont (FR)**
Inventeur : **Chasson, Alain
7, rue des Bouleaux blancs
F-92390 Villeneuve la Garenne (FR)**

(74) Mandataire : **Phélip, Bruno et al
c/o Cabinet Harlé & Phélip 21, rue de La
Rochefoucauld
F-75009 Paris (FR)**

## Description

La présente invention concerne un dispositif d'attache à douilles métalliques de reprise d'efforts, dont les douilles sont destinées à être insérées dans des structures composites, et en particulier des structures composites à armature de fibres noyée dans une matrice en matière synthétique, et présentant au moins un alésage de logement des douilles, qui sont elles-mêmes destinées à être traversées par un axe de retenue de la structure composite correspondante sur un support, pour assurer une liaison mécanique qui, lorsqu'elle est soumise à des efforts de traction-compression de la structure par rapport au support, permet la reprise de ces efforts sous la forme d'efforts radiaux encaissés par les douilles.

Plus précisément, l'invention se rapporte à un tel dispositif à douilles destiné à l'attache, sur un support, d'un élément essentiellement réalisé en matériaux composites, et comportant au moins un faisceau de filaments continus, minéraux et/ou organiques à haute résistance mécanique et agglomérés par une résine synthétique polymérisée, qui forme au moins une boucle et est destiné à être soumis à au moins des charges importantes en traction, les douilles métalliques du dispositif se logeant dans une même boucle et étant traversées par un axe de retenue au support.

En particulier, de tels dispositifs à douilles sont utilisables pour l'attache des pales de rotor, notamment d'aérodynes à voilure au moins partiellement tournante, tels que les hélicoptères, sur le moyeu du rotor ou sur un organe tel qu'une ferrure, chape ou un manchon de liaison au moyeu, lorsque chaque pale est essentiellement en matériaux composites et possède une ossature résistante qui comprend au moins un longeron comportant au moins un faisceau ou écheveau de filaments continus minéraux ou organiques à haute résistance mécanique et agglomérés par une résine synthétique polymérisée, et qui forme, dans le pied du longeron par lequel la pale est destinée à être attachée au moyeu ou à l'organe de liaison au moyeu du rotor, au moins une boucle dans laquelle est logé et solidarisé un baguage interne, constitué de douilles métalliques de reprise d'efforts et traversé par un axe de retenue au moyeu ou à l'organe de liaison à ce dernier.

Dans de telles pales, on sait que le faisceau de filaments continus peut avantageusement être réalisé sous la forme de plusieurs rubans accolés et agglomérés les uns aux autres, de stratifils unidirectionnels et longitudinaux (c'est-à-dire qui s'étendent selon l'axe longitudinal ou l'envergure de la pale), qui sont agglomérés par une résine synthétique d'imprégnation thermodurcissable et polymérisée, et qui sont enroulés autour des douilles de façon à constituer une boucle d'attache.

Bien que le dispositif d'attache à douilles selon l'invention soit utilisable d'une manière générale dans le domaine de la construction, et en particulier de la construction aéronautique, pour assurer la liaison à un support d'un élément filamentaire composite, soumis à des charges très importantes de traction et dans lequel les douilles sont intégrées, au moyen d'un axe ou d'une broche traversant les douilles, ou, en d'autres termes, pour réaliser le baguage interne de reprise d'efforts d'un alésage d'un élément filamentaire composite, destiné à être relié à un support par un axe de liaison mécanique traversant le baguage et soumis à des efforts radiaux importants, le dispositif d'attache à douilles métalliques selon l'invention sera présenté et décrit dans la suite du présent mémoire uniquement dans le cadre de son application particulière à la liaison des pales de rotor de giravions au moyeu ou à un organe de raccordement au moyeu correspondant, lorsque les pales sont en composite et que leurs pieds présentent au moins une boucle formée par un enroulement de stratifils, car il semble que ce cadre d'application soit celui pour lequel le dispositif d'attache selon l'invention présente le plus grand intérêt, en raison de l'importance de l'effort centrifuge de traction qui sollicite l'attache de chaque pale en rotation sur le moyeu et qui s'échelonne de 10.000 à 40.000 daN pour les hélicoptères courants, suivant leur taille.

Pour raccorder le pied d'une telle pale de rotor d'hélicoptère à son moyeu, en le rattachant par exemple à une chape de support rigide présentée soit directement par le moyeu soit par une ferrure conformée en chape double ou en manchon de liaison au moyeu, on a déjà utilisé des douilles d'attache de forme externe biconique, et traversées chacune axialement par un alésage cylindrique de logement de l'axe ou de la broche de retenue. Ces douilles biconiques avaient pour avantages, d'une part de faciliter la fermeture l'un sur l'autre des demi-moules d'extrados et d'intrados coopérant et assemblés pour constituer un moule de polymérisation de la pale en composite lors de sa fabrication, et, d'autre part, de permettre l'obtention d'un emprisonnement définitif de chaque douille biconique dans le pied de pale correspondant. Aussi longtemps que les stratifils formant la boucle du pied de pale ont été mis en place individuellement et successivement dans le moule, il a été possible de les lisser à la main, un à un, afin de rattraper petit à petit les différences de longueur sur les stratifils liés à la surface externe biconique des douilles. Mais, à la suite de l'apparition et du développement des techniques de mis en oeuvre de stratifils en écheveau et d'enroulements mécaniques de stratifils en rubans, pouvant former les écheveaux, il n'a plus été possible de conserver sur les douilles des surfaces d'enroulement de forme conique, qui conduisaient à avoir des stratifils tendus sur un bord d'un ruban (du côté de la grande base d'une section conique) et ondulés sur l'autre bord du ruban (du côté de la petite base de la même portion conique). De plus, les rubans de stratifils avaient naturellement tendance à s'échapper du pourtour des portions coniques, au fur et à mesure que l'épaisseur de l'empilement des rubans augmentait. Ces inconvénients majeurs ont imposé de renoncer aux douilles biconiques et ont conduit à l'utilisation de douilles cylindriques.

De nombreux exemples de raccordement de pales d'hélicoptère aux moyeux de rotors correspondants à l'aide de douilles de reprise d'efforts métalliques et cylindriques ont déjà été proposés.

Dans le brevet français 1544344, qui concerne un dispositif d'ancrage d'un élément en matière synthétique renforcée de fibres de verre et se terminant par une boucle, telle qu'une pale de rotor dont le pied est formé par la boucle, dans une ferrure métallique formée de deux demi-coquilles qui emprisonnent complètement la boucle, cette dernière est réalisée au moyen d'écheveaux de stratifils s'étendant jusqu'au longeron ou au bout de la pale, et entoure une douille cylindrique qui est noyée dans la ferrure, et qui est traversée par un axe de fixation au moyeu du rotor.

Une couche de contact, par exemple de résine fluorocarbonée, présentant une résistance élevée aux chocs et à la compression, un faible coefficient de frottement, donc de bonnes propriétés anti-adhésives et une bonne résistance à l'usure, est étalée, pour réduire les frottements, entre, d'une part la boucle composite et, d'autre part, la ferrure métallique et la douille, pour éviter le développement d'une corrosion par frottement et l'endommagement du pied de pale en permettant des déformations libres du pied de pale et de la ferrure indépendamment l'un de l'autre, suivant leur module d'élasticité propre. Dans cette réalisation, on évite donc le collage entre la boucle et la douille, mais la retenue de la boucle est assurée par coopération avec la douille et la ferrure qui enveloppe complètement la boucle.

Dans le brevet français 1581324, on retrouve une pale de rotor en matière plastique renforcée de fibres sous forme de stratifils longitudinaux par rapport à l'axe de la pale, les stratifils étant imprégnés de résine synthétique et disposés en boucles dans le pied de pale qui est fixé au moyeu du rotor par des boulons traversant les boucles. Les stratifils sont disposés en deux écheveaux, côte à côte dans le plan de trainée et chacun d'eux forme, au pied des pales, une boucle ou une paire de boucles superposées, les deux boucles ou paires de boucles étant enveloppées dans un étui constitué d'une moitié inférieure et d'une moitié supérieure, qui comportent chacune un manchon en saillie intérieure jusqu'à mi-hauteur du pied des pales, et qui est engagé dans chaque boucle ou paire de boucles. Ainsi, les stratifils de chaque boucle ou paire de boucles passent autour d'une douille cylindrique constituée par la superposition ou l'alignement dans leur prolongement axial de deux manchons cylindriques, identiques et coaxiaux, traversés par les boulons de fixation au moyeu.

Le brevet français 2004934 propose également, pour relier un pied de pale à une ferrure de raccordement à un moyeu, des douilles cylindriques noyées dans un noyau en matière plastique du longeron de pale et entourées de tissus ou nappes de fibres de verre enrobés de résine synthétique polymérisée.

Le brevet français 2252916 propose, pour l'attache d'un pied de pale à un moyeu, une ferrure comprenant une douille cylindrique équipée d'une bague interne traversée par une broche, la douille étant solidaire d'un prolongement effilé cruciforme, en forme de plaque perpendiculaire à la douille en son milieu, et présentant des nervures perpendiculaires à la plaque et solidaires de celle-ci, du côté de la partie courante de la pale. Cette plaque effilée et cruciforme sépare l'écheveau de stratifils formant la boucle et qui entoure la douille, en quatre parties séparées de la douille et des ailes de la plaque cruciforme par des intercalaires stratifiés de tissus de verre imprégnés de résine pour favoriser l'adhérence et la résistance au cisaillement, des éléments de remplissage étant de plus prévus dans les évidements délimités entre la douille, la plaque et les différentes parties de l'écheveau, du côté de la partie courante de la pale.

Le brevet français 2327858 décrit un élément de raccordement, pour la transmission répartie d'efforts dans un composant, l'élément comportant deux douilles coaxiales et en alignement axial, entourées chacune d'une boucle formée par un enroulement particulier avec une moitié d'un faisceau de stratifils de fibres imprégnées de résine synthétique.

Dans ce brevet, qui concerne les composants en matière plastique renforcée de fibres et soumis à des sollicitations élevées, chaque douille est en saillie par rapport à la surface d'extrémité du composant, et la partie en saillie de la douille présente une gorge dans laquelle sont enroulées les fibres. De plus, la boucle entourant la partie en saillie de la douille correspondante s'amincit en un disque mince, de la douille correspondante vers le bord de l'élément composite, de sorte que les charges élevées sollicitant le composant soient transmises, sans concentration locale de contrainte, par une grande surface à une broche de raccordement traversant les douilles. Les stratifils enroulés sont rapportés avec les douilles, mais n'appartiennent pas aux composants, de sorte que si ce dernier comprend une structure filamentaire, les stratifils des boucles ne sont en aucun cas mélangés aux filaments de la structure du composant. En effet, les éléments de raccordement peuvent être réalisés sous la forme d'éléments préfabriqués, comportant chacun des douilles avec leur enroulement et équipées d'un manchon interne, l'ensemble étant préparé à l'aide d'un outillage spécial comportant une galette d'enroulement en rotation.

Le brevet français 2350541 propose une liaison d'un pied de pale en composite à une chape de moyeu par des alésages percés dans le pied de pale et traversés par des boulons de fixation, chaque alésage étant délimité par deux douilles métalliques cylindriques en alignement axial et fixées par un agent de liaison élastique dans un même trou percé dans le pied de pale. Les extrémités internes des deux douilles sont séparées l'une de l'autre par une bague élastique et en contact avec celles-ci, alors que les extrémités externes des douilles sont dans les plans des faces opposées du pied de pale, les deux douilles étant coaxiales et de préférence identiques.

Le brevet français 2390331 décrit une jonction principale de voilure portante en composite à matrice en matière plastique armée de fibres, pour aéronefs, la jonction comprenant une cosse métallique présentant un alésage central traversé par une douille d'articulation principale, et bordé d'un côté par une pluralité de logements en forme de niches en arc de cercle, sensiblement concentriques et divergeantes à leurs extrémités, pour loger des boucles de traction en stratifils. De l'autre côté de l'alésage, celui-ci est bordé d'un corps de compression conique et composite, entre les branches des boucles sortant des niches, lesdites boucles logées dans les niches étant incorporées à la structure de la voilure.

Par ailleurs, il a également été déjà proposé, par le brevet US 4251309, de relier le pied d'une pale au moyeu d'un rotor par quatre boucles d'extrémité, formées par des bandes composites et disposées en deux paires, symétriques par rapport au plan de battement, de boucles superposées et coaxiales, une douille cylindrique et composite étant engagée dans chaque paire de boucle, et un capuchon d'extrémité étant enfoncé sur chaque portion de douille logée dans une boucle.

Mise à part la réalisation tout-composite proposée dans ce brevet américain, et qui a pour inconvénient de multiplier le nombre des attaches et donc de rendre le pied de pale très volumineux, toutes les autres réalisations connues à douilles métalliques cylindriques présentent un inconvénient majeur et commun, qui s'ajoute aux inconvénients particuliers à chaque réalisation, tels que la présence d'une bague élastique contre laquelle sont appliquées les extrémités internes au pied de pale des deux douilles dans le brevet français 2350541, la nécessité de prévoir des gorges périphériques dans la partie de chacune des deux douilles qui fait saillie par rapport au composant à rattacher dans le brevet français 2327858, la réalisation d'une seule pièce de la douille avec une plaque effilée et curciforme ou avec une cosse présentant des logements en forme de niches en arc de cercle, respectivement dans les brevets français 2252916 et 2390331, et enfin la coopération de la ou des douilles cylindriques métalliques avec une ferrure métallique ou avec un étui constitués respectivement de deux demi-coquilles ou d'une moitié inférieure et d'une moitié supérieure enveloppant complètement la boucle du pied de pale, respectivement dans les brevets français 1544344 et 1581324.

Mais le principal inconvénient que présentent toutes les réalisations comportant des douilles cylindriques métalliques vient de ce que les douilles utilisées sont en acier et ont un coefficient de dilatation thermique très supérieur à celui des matériaux composites qui les entourent. Au moulage, à une température qui peut par exemple être de l'ordre de 120°C, les douilles métalliques se dilatent, en particulier radialement, et la portion de faisceau de stratifils composites qui les entoure au moins partiellement se polymérise au diamètre supérieur des douilles dilatées. Au refroidissement, les douilles se contractent, notamment radialement, de sorte qu'il se forme un jeu radial entre les douilles et le matériau composite qui les entoure, ce qui, sous l'effet des fortes sollicitations du pied de pale (force centrifuge et moments alternés), entraîne un ébranlement de chaque douille dans son alésage stratifié, et un endommagement rapide de l'attache. De plus, dans les réalisations dans lesquelles les stratifils sont collés autour des douilles par un film de colle, la contraction au refroidissemment d'une douille crée un arrachement sur la périphérie du film de colle correspondant, et cet arrachement, sans rompre complètement ce film de colle, amorce cependant des zones de décollement. Dans ce cas, sous l'effet des fortes sollicitations du pied de pale, ainsi que du vieillissement par pénétration d'humidité dans les amorces de décollement, le film de colle se détériore rapidement jusqu'à la désolidarisation totale de la douille et du pied de pale. En utilisation, une douille décollée est la cause de divers endommagements, notamment l'ovalisation des éléments stratifiés qui l'entourent, ce qui impose de procéder à une réparation avec une douille montée avec davantage de jeu, limitant encore la tenue d'une telle réparation. Dans les réalisations à stratifils collés autour des douilles, une autre cause du mauvais collage de la douille dans l'alésage stratifié correspondant résulte d'une très faible pression appliquant le film de colle contre la douille, ceci résultant de ce que la polymérisation s'effectue dans un moule fermé non déformable et avec des matériaux stratifiés imprégnés de résine liquide lors de la polymérisation.

En conséquence, le principal inconvénient des dispositifs d'attache connus à douilles métalliques cylindriques est que la durée de vie de l'attache est réduite de façon importante en service en raison du jeu radial résultant des dilatations différentielles entre les douilles et le matériau composite qui les entoure, au cours de la polymérisation. De plus, dans les réalisations à stratifils collés autour des douilles, le décollage de ces dernières entraîne une réduction encore plus importante de la durée de vie de l'attache. Des essais avec une douille décollée sur des pales de rotor arrière en composite ont démontré l'influence très nette de cette réduction de la durée de vie de l'attache sur des pales sur lesquelles on avait pu démontrer initialement une durée de vie infinie avec des douilles correctement collées.

Par la présente invention, on se propose d'améliorer la tenue en fatigue des pieds de pale en composite en évitant, essentiellement, le jeu radial des douilles cylindriques et métalliques de reprise des efforts, par rapport à l'enroulement des stratifils constituant l'extrémité du longeron, et, éventuellement de plus, le risque de décollement de ces douilles par rapport à cet enroulement. Pour réaliser cette amélioration, la présente invention propose de remplacer chaque douille ou paire de douilles métalliques et cylindriques, éventuellement séparées d'une bague élastique, de l'état de la technique par un dispositif d'attache à douilles métalliques de reprise d'efforts, du type comprenant deux douilles coaxiales destinées à être logées dans une même boucle et traversées par un axe de retenue au support, et qui se caractérise en ce que l'une des deux douilles est une douille interne présentant un alésage interne cylindrique de passage et d'appui de l'axe de retenue, et une face latérale externe tronconique, et l'autre douille est une douille externe, fendue de l'une et à l'autre de ses extrémités axiales, et présentant une face latérale externe cylindrique, destinée à être solidarisée à l'élément en matériaux composites dans la boucle duquel la douille externe est implantée, et un alésage interne tronconique, de forme complémentaire à celle de la face latérale externe tronconique de la douille interne, qui est destinée à être emmanchée axialement dans la douille externe et solidarisée à cette dernière dans une position axiale correspondant à une déformation déterminée en expansion radiale de la douille externe. Dans un tel dispositif d'attache, la douille externe, d'une part, se déforme légèrement en expansion radiale sous l'action de la douille interne, et ainsi s'adapte au diamètre exact du logement cylindrique ménagé dans les matériaux composites qui l'entourent, et, d'autre part, peut être solidarisée à ces matériaux composites par un collage qui soit d'excellente qualité.

Dans une forme simple de réalisation, la douille externe présente une seule fente qui s'étend sensiblement selon l'une de ses génératrices.

Avantageusement, afin de faciliter le montage, dans de bonnes conditions, d'un élément équipé d'un tel dispositif d'attache à douilles dans une chape de support, les deux douilles du dispositif ont sensiblement la même dimension axiale, qui est légèrement supérieure à l'épaisseur de l'élément en matériau composite, au niveau de la boucle correspondante.

Avantageusement, afin de maintenir la zone de la boucle en précontrainte, pour favoriser le blocage mécanique du dispositif à douilles dans le logement et améliorer la tenue en fatigue de l'ensemble, les deux douilles sont destinées à être solidarisées l'une à l'autre par collage de la douille interne dans la douille externe en expansion radiale.

L'invention a également pour objet une pale de rotor, en particulier pour aérodyne à voilure au moins partiellement tournante tel qu'un hélicoptère, la pale étant du type essentiellement réalisé en matériaux composites et ayant une ossature résistante qui comprend au moins un longeron comportant au moins un faisceau de filaments continus minéraux et/ou organiques à haute résistance mécanique et agglomérés par une résine synthétique polymérisée, et qui forme, dans le pied du longeron par lequel la pale est destinée à être attachée au moyeu ou à un organe de liaison au moyeu du rotor, au moins une boucle dans laquelle est logé et solidarisé un baguage interne constitué de deux douilles métalliques coaxiales de reprise d'efforts, et traversé par un axe de retenue au moyeu ou à l'organe de liaison à ce dernier, la pale selon l'invention étant caractérisée en ce que les deux douilles coaxiales appartiennent à un dispositif d'attache à douilles métalliques de reprise d'efforts, du type propre à l'invention et tel que présenté ci-dessus.

Dans une telle pale, il est avantageux que les deux douilles du dispositif d'attache soient solidaires l'une de l'autre par collage de la douille interne dans la douille externe. De plus, les deux douilles sont avantageusement solidaires l'une de l'autre dans une position axiale relative telle que les faces d'extrémités axiales des deux douilles soient sensiblement coplanaires et en saillie par rapport aux faces opposées au pied du longeron, au niveau de la boucle correspondante, de façon à former des faces d'appui contre des pièces de montage sur le moyeu ou sur l'organe de liaison au moyeu. Grâce à une telle coopération des douilles interne et externe du dispositif, la douille externe peut avantageusement être solidarisée par sa face latérale externe cylindrique à la structure composite du pied du longeron, par un collage d'excellente qualité.

Afin de protéger les filaments du faisceau entourant la douille externe, vis-à-vis de cette douille externe, il est avantageux, de plus, que la partie de la face latérale externe cylindrique de cette douille externe s'étendant entre deux parties annulaires de cette face qui sont adjacentes aux extrémités axiales de cette douille externe, soit au moins partiellement solidarisée à la partie en regard du faisceau de filaments, dans sa portion entourant la douille externe, par l'intermédiaire d'une protection collée à la fois à la douille externe et au faisceau de filaments.

Dans une forme de réalisation préférentielle, se prêtant à une fabrication automatisée et simplifiée, le faisceau de filaments est constitué de plusieurs rubans de stratifils unidirectionnels agglomérés par une résine synthétique d'imprégnation, les rubans étant accolés et agglomérés les uns aux autres par la résine d'imprégnation polymérisée qui assure simultanément le collage des rubans accolés sur la protection dans la partie de la boucle correspondante qui entoure la douille externe.

De plus, dans les structures de pale en composite dont le pied comporte au moins un noyau de remplissage, en général en un matériau synthétique alvéolaire léger, disposé entre les deux branches du faisceau de filaments formant une boucle d'attache et qui prolongent la partie de ce faisceau entourant une douille de reprise d'efforts, il est avantageux que, selon l'invention, la partie de la face latérale externe cylindrique de la douille externe s'étendant entre deux parties annulaires de cette face qui sont adjacentes aux extrémités axiales de cette douille externe, soit au moins partiellement solidarisée à un tel noyau de remplissage, entre les deux branches prolongeant la partie du faisceau entourant la douille externe.

Dans ce cas, il est avantageux que la solidarisation au noyau de remplissage soit assurée par l'intermédiaire d'une protection collée à la fois à la douille externe et audit noyau de remplissage.

Dans une forme très simple de réalisation, ladite protection est annulaire et comprend au moins une couche de tissu de fibres minérales et/ou organiques à haute résistance mécanique, qui est enroulée autour de la douille externe et agglomérée par une résine synthétique d'imprégnation polymérisée assurant simultanément le collage de la protection à la douille externe et au faisceau de filaments, ainsi, le cas échéant, qu'au noyau de remplissage.

Afin de renforcer encore la solidarisation entre la douille externe du dispositif d'attache et la structure composite du pied de pale, chacune des deux parties annulaires de la face latérale externe cylindrique de la douille externe qui sont adjacentes aux extrémités axiales de cette douille externe est directement collée par une résine synthétique polymérisée à un revêtement entourant au moins le pied du longeron et constitué d'au moins deux couches, de préférence croisées et inclinées à sensiblement 45° sur la direction longitudinale du longeron, de tissus de fibres imprégnées et rigidifiées par ladite résine polymérisée.

L'invention sera mieux comprise, et d'autres avantages et caractéristiques de l'invention apparaîtront, à la lecture de la description donnée ci-dessous, à titre non limitatif, d'un exemple préféré de réalisation décrit en référence aux dessins annexés sur lesquels:

Fig. 1 est une vue schématique en perspective éclatée représentant les deux douilles du dispositif destinées à équiper l'une des deux boucles d'attache d'un pied de pale en composite, et

Fig. 2 est une vue en coupe axiale d'un dispositif d'attache à deux douilles selon la figure 1 équipant l'une des deux boucles du pied de pale également selon la figure 1 et monté dans une chape d'un support qui peut être soit directement le moyeu soit un organe intermédiaire de liaison à ce dernier, par exemple une ferrure en chape double liée d'un côté à la pale et de l'autre au moyeu, ou encore un manchon.

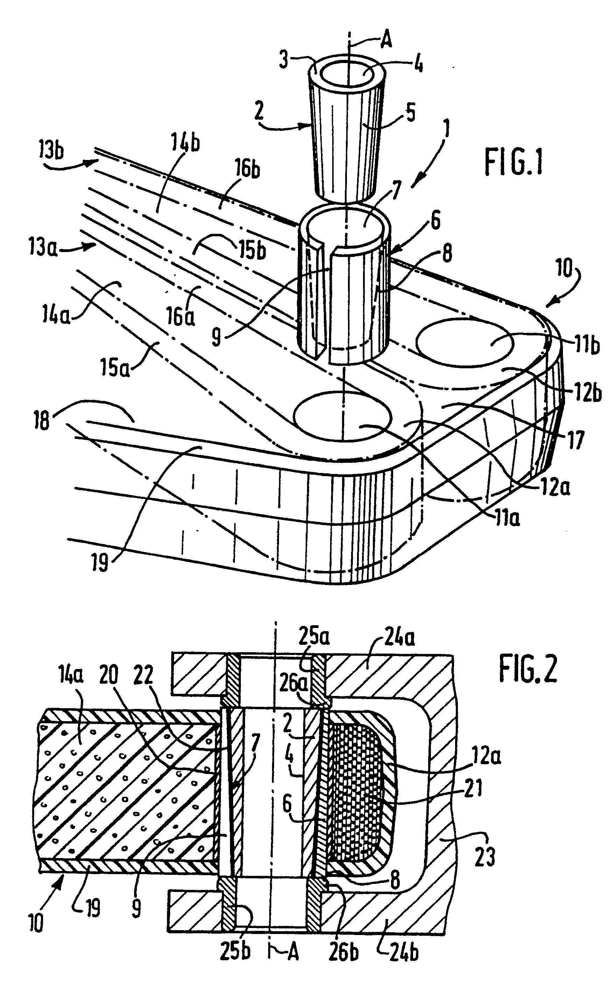

En référence aux figures 1 et 2, le dispositif d'attache 1, à douilles de reprise d'efforts, comprend une douille métallique interne 2, en acier de préférence inoxydable, et en forme de tronc de cône traversé axialement, de l'une à l'autre de ses bases ou faces planes d'extrémité axiale perpendiculaires à son axe A (et dont seule la grande base ou face plane d'extrémité supérieure 3 est visible sur la figure 1), par un alésage délimité par une surface interne 4 cylindrique de section circulaire. Le dispositif d'attache 1 comprend également une douille externe 6, également en acier de préférence inoxydable, mais en forme de tronc de cylindre de section circulaire, c'est-à-dire à surface latérale externe cylindrique 8. Cette douille externe 6 est également traversée axialement, de l'une à l'autre de ses faces planes d'extrémité axiale perpendiculaires à son axe A, par un alésage, mais ce dernier est délimité par une surface interne tronconique 7, en concordance avec la face latérale externe tronconique 5 de la douille interne 2, avec laquelle elle coopère lors de l'emmanchement coaxial de la douille interne 2 dans l'alésage tronconique interne de la douille externe 6. La douille externe 6 est de plus une douille fendue axialement par une unique fente 9 s'étendant de l'une à l'autre de ses faces d'extrémité axiale et selon l'une de ses génératrices, de sorte que la douille externe 6 peut se déformer en expansion radiale par l'emmanchement axial de la douille interne 2 dans la douille externe 6.

Comme représenté sur la figure 1, un dispositif d'attache 1, constitué des deux douilles 2 et 6, est destiné à être monté dans chacun des deux logements cylindriques 11a et 11b, d'axes parallèles, délimités chacun dans le pied 10 d'une pale en matériaux composites de rotor d'hélicoptère, par une boucle 12a ou 12b formée par un faisceau de stratifils 13a et 13b issus d'un longeron de la pale, et par un noyau de remplissage 14a ou 14b, sensiblement en forme de coin, disposé entre les deux branches 15a et 16a ou 15b et 16b respectivement du faisceau 13a ou 13b, et qui prolongent la boucle 12a ou 12b du faisceau correspondant. Le pied de pale 10 est complété par des éléments de remplissage 17 et 18, qui remplissent respectivement les volumes délimités pour le premier, 17, entre les portions convexes en regard l'une de l'autre des boucles 12a et 12b, et pour le second 18, entre, d'une part, la branche 15a la plus proche du bord de fuite du pied de pale 10 et appartenant au faisceau 13a lui-même le plus proche de ce bord de fuite, et, d'autre part, la portion située audit bord de fuite d'un revêtement stratifié 19, qui enveloppe tout le pied de pale 10.

A la fabrication de la pale composite, chaque douille externe 6 est mise en place dans un demi-moule inférieur ou d'intrados, puis les faisceaux de stratifils 13a et 13b sont disposés dans ce demi-moule de façon à constituer le ou les longerons de la pale et les boucles 12a et 12b du pied de pale 10 qui sont formées de façon continue autour des douilles externes 6 et des noyaux de remplissage 14a et 14b préalablement accolés aux douilles externes 6, après avoir entouré d'une protection stratifiée et composite 20 la portion de la surface latérale externe cylindrique 8 de chaque douille 6 s'étendant entre les parties annulaires de cette surface 8 qui sont directement adjacentes aux extrémités axiales de la douille 6. Cette protection 20, destinée à protéger les stratifils de la boucle 12a ou 12b et le noyau 14a ou 14b correspondant vis-à-vis de la douille externe 6 métallique correspondante, est constituée par superposition de quelques couches de tissus de fibres de verre ou de fibres aramides préimprégnées d'une résine synthétique d'agglomération polymérisable, formant un film intercalaire de collage pour la liaison de la protection 20 à la douille 6. Chaque noyau de remplissage 14a, 14b, comme d'ailleurs chacun des éléments de remplissage 17 et 18 ultérieurement disposés dans le demi-moule inférieur, est constitué d'un bloc de matière synthétique légère et relativement rigide telle qu'une mousse dure de polyuréthane. Chaque faisceau de stratifils 13a et 13b est constitué par un grand nombre de rubans 21 accolés les uns aux autres et agglomérés par une résine synthétique d'imprégnation polymérisable, chaque ruban 21 étant lui-même constitué d'un grand nombre de stratifils longitudinaux et unidirectionnels de fibres de verre ou de fibres aramides agglomérés côte-à-côte par la résine d'imprégnation, qui renforce le film de colle formé par la résine d'imprégnation du tissu de la protection 20 (la même résine pouvant être utilisée pour imprégner ces différents composants), pour la liaison au noyau 14a ou 14b correspondant et à la portion interne et concave en regard sur la boucle 12a ou 12b correspondante. Le revêtement stratifié et composite 19 est de structure classique : il est constitué d'un empilement d'au moins une couche, mais de préférence de deux couches de tissus de fibres de verre, dont les fils de chaîne et de trame sont croisés d'une couche par rapport à l'autre et inclinés à environ 45° sur l'axe longitudinal ou la direction du bord d'attaque de la pale, et d'au moins une couche, mais de préférence de deux couches superposées de tissus de fibres de carbone, dont les fils de chaînes et de trame sont également croisés d'une couche à l'autre et inclinés sensiblement à 45° sur la même direction, les différentes couches de tissus étant toutes préimprégnées de résine synthétique d'agglomération polymérisable, qui forme un film de colle pour assurer la liaison directe du revêtement 19 contre les parties annulaires de la surface latérale externe cylindrique 8 de chaque douille 6 qui sont adjacentes aux extrémités axiales de cette douille 6, comme représenté sur la figure 2.

Avant la fermeture du moule et la polymérisation, par la fermeture d'un demi-moule supérieur ou d'extrados sur le demi-moule inférieur ou d'intrados, puis disposition du moule dans une étuve de polymérisation, la douille interne 2 de chaque dispositif d'attache est emmanchée coaxialement dans l'alésage de la douille externe 6 correspondante, dont la face latérale interne tronconique 7 a été préalablement enduite d'un film de colle. De même, la surface latérale externe tronconique 5 de la douille interne 2 peut être enduite d'un film de colle avant cet emmanchement dans la douille externe 6. Sous l'effet de cet emmanchement de la douille interne tronconique 2, la douille externe fendue 6 peut se déformer en expansion radiale et s'adapter à différents diamètres ou à des diamètres peu précis. Ainsi, la douille externe 6 peut s'adapter au diamètre exact du logement cylindrique ménagé dans les matériaux composites qui l'entourent (boucle 12a ou 12b des faisceaux, protection 20 et noyau 14a ou 15b). De plus cet emmanchement permet d'assurer le collage de la face latérale externe cylindrique 8 de la douille externe 6 contre ces matériaux composites qui l'entourent avec une bonne pression de contact, et donc obtenir un collage d'excellente qualité. En effet, le collage s'effectue sur les deux interfaces, d'une part entre la structure composite du pied de pale 10 et la face externe cylindrique 8 de la douille externe 6, par le film de colle formé de la ou des résines d'imprégnation, la douille métallique 8 étant ainsi collée directement contre le revêtement stratifié composite 19 et, par l'intermédiaire de la protection stratifiée et composite 20, contre le noyau 14a ou 14b correspondant et contre la boucle 12a ou 12b correspondante, et, d'autre part, entre la douille externe 8 et la douille interne 2, par le film de colle représenté en 22 sur la figure 2. La pression axiale d'emmanchement des douilles 2 et 6, et donc les pressions radiales au niveau des interfaces, sont assurées et maîtrisées pendant la phase de polymérisation et de collage, ce qui assure une bonne pression sur les faces collées.

Ce procédé de montage dans le pied de pale composite 10 d'un dispositif d'attache à deux douilles métalliques de reprise d'efforts qui sont emmanchées et collées l'une dans l'autre, et dont la douille externe 8 est collée sous pression aux matériaux composites qui l'entourent, a pour avantage de mettre l'ensemble de la zone d'une boucle 12a ou 12b d'un faisceau de stratifils en précontrainte, ce qui assure un blocage mécanique dans l'enroulement de stratifils correspondants, et ce qui est simultanament très bénéfique pour la tenue en fatigue de l'attache ainsi réalisée. De plus, cette précontrainte améliore notablement la tenue en vieillissement des collages.

Des essais réalisés par la demanderesse ont permis de constater ces résultats avantageux sur des pales utilisées en vol sur des rotors et dont les douilles cylindriques de l'état de la technique, ébranlées dans leur logement, ont été remplacées chacune par un dispositif d'attache à deux douilles tel que décrit ci-dessus.

Comme représenté sur la figure 2, on notera qu'il est avantageux que les deux douilles 2 et 6 d'un dispositif d'attache soient dimensionnées de telle sorte qu'elles présentent la même dimension axiale, légèrement supérieure à l'épaisseur du pied de pale 10 dans sa partie d'extrémité présentant les logements 11a et 11b, et que, dans leur position d'emmanchement relatif convenable, les faces planes d'extrémités axiales des deux douilles soient coplanaires et en saillie par rapport aux faces opposées du pied de pale 10 dans cette même partie d'extrémité présentant les logements 11a et 11b de façon à faciliter avantageusement le montage du pied de pale 10 ainsi équipé sur son support. Sur la figure 2, le support 23, qui est un moyeu métallique ou composite, ou encore un organe de liaison au moyeu, telle qu'une ferrure ou un manchon de liaison, présente une chape radiale à deux branches 24a et 24b disposées à l'aplomb l'une au-dessus de l'autre. Lorsque le support 23 est le moyeu, la branche supérieure 24a et la branche inférieure 24b de la chape peuvent être respectivement l'un de plusieurs bras radiaux d'un plateau supérieur de moyeu et l'un de plusieurs bras radiaux d'un plateau inférieur de moyeu. Des perçages cylindriques coaxiaux, et alignés dans le prolongement l'un de l'autre sont ménagés au travers des deux branches superposées 24a et 24b de la chape. Dans chacun des ces perçages est montée une bague épaulée 25a ou 25b, dont l'épaulement respectif 26a ou 26b est tourné vers l'intérieur de la chape. La chape présente ainsi deux paires d'alésages alignés et superposés, équipés de bagues épaulées. Le pied de pale 10, dont chaque logement 11a et 11b est équipé de deux douilles emmanchées et collées 2 et 6, est introduit et centré entre les branches 24a et 24b de la chape, de sorte que les faces axiales d'extrémité coplanaires des deux douilles de chaque logement 11a et 11b soient en regard des épaulements 26a et 26b des bagues 25a et 25b de la paire de perçages correspondants des branches 24a et 24b de la chape, en formant des faces d'appui contre ces épaulements 26a et 26b des bagues. La fixation du pied de pale 10 dans la chape est ensuite assurée par l'engagement et l'appui, dans les alésages internes des bagues 25a et 25b et également de la douille interne 2 correspondante, d'une broche d'attache de pale (non représentée), dont une extrémitée est munie d'une tête d'appui contre la face supérieure de la branche supérieure 24a de la chape, et dont l'autre extrémité, en saillie par rapport à la face inférieure de la branche inférieure 24b de la chape, est une extrémité filetée sur laquelle est vissé un écrou, selon un montage classique. Ainsi, les efforts importants auxquels la pale est soumise, notamment en traction longitudinale sous l'effet de la force centrifuge, sont repris par les douilles 2 et 6, sous la forme de charges radiales transmises à chaque broche d'attache retenue sur la chape de support.

Il est clair que le dispositif d'attache à deux douilles métalliques de reprise d'efforts peut être utilisé non seulement pour équiper des pales neuves, mais également pour la réparation de pales de rotor en composite équipant déjà des hélicoptères actuellement en service et munies de douilles d'attache métalliques cylindriques de l'état de la technique.

## Revendications

1. Dispositif d'attache à douilles (2, 6) de reprise d'efforts, destiné à l'attache sur un support (23), tel qu'un moyeu de rotor ou un organe de liaison au moyeu, d'un élément (10) essentiellement en matériaux composites, tel qu'une pale de rotor, comportant au moins un faisceau (13a, 13b) de filaments continus, minéraux et/ou organiques à haute résistance mécanique et agglomérés par une résine synthétique polymérisée, qui forme au moins une boucle (12a, 12b) et est destiné à être soumis à au moins des charges importantes en traction, ledit dispositif (1) comprenant deux douilles (2, 6) coaxiales, métalliques, destinées à être logées dans une même boucle (12a ou 12b) et traversées par un axe de retenue au support (23), et étant caractérisé en ce que l'une des deux douilles est une douille interne (2), présentant un alésage interne cylindrique (4) de passage et d'appui dudit axe de retenue, et une face latérale externe tronconique (5), et l'autre douille est une douille externe (6), fendue (9) de l'une à l'autre de ses extrémités axiales, et présentant une face latérale externe cylindrique (8) destinée à être solidarisée audit élément (10) en matériaux composites dans la boucle (12a ou 12b) duquel la douille externe (6) est implantée, et un alésage interne tronconique (7), de forme complémentaire à celle de la face latérale externe (5) tronconique de la douille interne (2), qui est destinée à être emmanchée axialement dans la douille externe (6) et solidarisée à cette dernière dans une position axiale correspondant à une déformation déterminée en expansion radiale de la douille externe (6).

2. Dispositif d'attache selon la revendication 1, caractérisé en ce que la douille externe (6) présente une seule fente (9) s'étendant sensiblement selon l'une de ses génératrices.

3. Dispositif d'attache selon l'une des revendications 1 à 2, caractérisé en ce que les deux douilles (2, 6) ont sensiblement la même dimension axiale, qui est légèrement supérieure à l'épaisseur de l'élément (10) en matériaux composites au niveau de la boucle (12a ou 12b) correspondante.

4. Dispositif d'attache selon l'une des revendications 1 à 3, caractérisé en ce que les deux douilles (2, 6) sont destinées à être solidarisées l'une à l'autre par collage (22) de la douille interne (2) dans la douille externe (6) en expansion radiale.

5. Pale de rotor, en particulier d'aérodyne à voilure au moins partiellement tournante, tel qu'un hélicoptère, ladite pale (10) étant essentiellement en matériaux composites et ayant une ossature résistante qui comprend au moins un longeron comportant au moins un faisceau de filaments continus (13a, 13b) minéraux ou organiques à haute résistance mécanique et agglomérés par une résine synthétique polymérisée, et qui forme, dans le pied (10) du longeron par lequel la pale est destinée à être attachée au moyeu (23) du rotor ou à un organe de liaison au moyeu, au moins une boucle (12a, 12b) dans laquelle est logé et solidarisé un baguage interne constitué de deux douilles métalliques et coaxiales (2, 6) de reprise d'efforts, et traversé par un axe de retenue au moyeu ou à l'organe de liaison à ce dernier (23), caractérisée en ce que les deux douilles coaxiales (2, 6) appartiennent à un dispositif d'attache selon l'une des revendications 1 à 4.

6. Pale selon la revendication 5, caractérisée en ce que les deux douilles (2, 6) du dispositif d'attache (1) sont solidaires l'une de l'autre par collage (22) de la douille interne (2) dans la douille externe (6).

7. Pale selon l'une des revendications 5 et 6, caractérisée en ce que les deux douilles (2, 6) sont solidaires l'une de l'autre dans une position axiale relative telle que les faces d'extrémité axiale des deux douilles (2, 6) sont sensiblement coplanaires et en saillie par rapport aux faces opposées du pied du longeron, au niveau de la boucle (12a, 12b) correspondante, de façon à former des faces d'appui contre des pièces de montage (25a, 25b) sur le moyeu ou sur l'organe de liaison à ce dernier (23).

8. Pale selon l'une des revendications 5 à 7, caractérisée en ce que la douille externe (6) est solidarisée par sa face latérale externe cylindrique (8) à la structure composite du pied du longeron (10).

9. Pale selon la revendication 8, caractérisée en ce que la partie de la face latérale externe cylindrique (8) de la douille externe (6) s'étendant entre deux parties annulaires de cette face (8) qui sont adjacentes aux extrémités axiales de cette douille externe (6), est au moins partiellement solidarisée à la partie en regard du faisceau de filaments (13a ou 13b), dans sa portion (12a ou 12b) entourant la douille externe (6), par l'intermédiaire d'une protection (20) collée à la fois à la douille externe (6) et au faisceau de filaments (13a ou 13b).

10. Pale selon la revendication 9, caractérisée en ce que le faisceau de filaments (13a, 13b) est constitué de plusieurs rubans (21) de stratifils unidirectionnels agglomérés par une résine synthétique d'imprégnation, les rubans (21) étant accolés et agglomérés les uns aux autres par ladite résine d'imprégnation polymérisée, qui assure simultanément le collage des rubans (21) accolés sur la protection (20) dans la partie de la boucle (12a ou 12b) correspondante qui entoure la douille externe (6).

11. Pale selon l'une des revendications 8 à 10, caractérisée en ce que la partie de la face latérale externe cylindrique (8) de la douille externe (6) s'étendant entre deux parties annulaires de cette face (8) qui sont adjacentes aux extrémités axiales de cette douille externe (6), est au moins partiellement solidarisée à un noyau de remplissage (14a ou 14b) disposé entre les deux branches (15a, 16a ou 15b, 16b) du faisceau de filaments (13a ou 13b) formant la boucle correspondant (12a ou 12b), et qui prolongent la partie de ce faisceau entourant la douille externe (6).

12. Pale selon la revendication 11, caractérisée en ce que la solidarisation audit noyau de remplissage (14a, 14b,) est assurée par l'intermédiaire d'une protection (20) collée à la fois à la douille externe (6) et audit noyau de remplissage (14a ou 14b).

13. Pale selon l'une des revendications 9, 10 et 12, caractérisée en ce que ladite protection (20) est annulaire et comprend au moins une couche de tissus de fibres minérales et/ou organiques à haute résistance mécanique, qui est enroulée autour de la douille externe (6) et agglomérée par une résine synthétique d'imprégnation polymérisée assurant simultanément le collage de ladite protection (20) à la douille externe (6) et au faisceau de filaments (13a, 13b) et/ou au noyau de remplissage (14a ou 14b).

14. Pale selon l'une des revendications 8 à 13, caractérisée en ce que chacune des deux parties annulaires de la face latérale externe cylindrique (8) de la douille externe (6) qui sont adjacentes aux extrémités axiales de cette douille externe (6) est directement collée par une résine synthétique polymérisée à un revêtement (19) entourant au moins le pied (10) du longeron et constitué d'au moins deux couches, de préférence croisées et inclinées à sensiblement 45° sur la direction longitudinale du longeron, de tissus de fibres imprégnées et agglomérées par ladite résine polymérisée.

## Claims

1. A fastening device including sleeves (2, 6) for absorbing forces, which is intended for fastening onto a support (23), such as a rotor hub or a component for connection to the hub, of an element (10) essentially constructed of composite materials, such as a rotor blade, comprising at least one bundle (13a, 13b) of continuous mineral and/or organic filaments having high mechanical strength and agglomerated by a polymerized synthetic resin, which forms at least one loop (12a, 12b) and is intended to be subjected to at least large traction loads, said device (1) comprising two coaxial, metallic sleeves (2, 6), intended to be accommodated in an individual loop (12a or 12b) and traversed by an axle for holding onto the support (23), characterised in that one of the two sleeves is an inner sleeve (2) exhibiting a cylindrical internal bore (4) for the passage and support of said holding axle, and a frustoconical outer lateral face (5), and the other sleeve is an outer sleeve (6), slotted (9) from one to the other of its axial ends, and exhibiting a cylindrical outer lateral face (8), intended to be made integral with said element (10) constructed of composite materials in the loop (12a or 12b) of which the outer sleeve (6) is fitted, and a frustoconical inner bore (7), of shape complementary to that of the frustoconical outer lateral face (5) of the inner sleeve (2), which is intended to be pressed axially into the outer sleeve (6) and made integral with the latter in an axial position corresponding to a determined deformation in radial expansion of the outer sleeve (6).

2. The fastening device as claimed in Claim 1, wherein the outer sleeve (6) exhibits only one slot (9) extending substantially along one of its generatrices.

3. The fastening device as claimed in one of Claims 1 to 2, characterised in that the two sleeves (2, 6) have substantially the same axial dimension, which is slightly greater than the thickness of the element (10) constructed of composite materials, at the location of the corresponding loop (12a or 12b).

4. The fastening device as claimed in one of Claims 1 to 3, characterised in that the two sleeves (2, 6) are intended to be made integral with one another by affixing (22) of the inner sleeve (2) in the outer sleeve (6) in radial expansion.

5. A rotor blade, especially for an aerodyne having an at least partially rotating wing system, such as a helicopter, said blade (10) being essentially constructed of composite materials and having a resistant frame which comprises at least one spar comprising at least one bundle of continuous mineral or organic filaments (13a, 13b) having high mechanical strength and agglomerated by a polymerized synthetic resin, and which forms, in the root (10) of the spar by which the blade is intended to be fastened to the hub (23) of the rotor or to a component for connection to the hub, at least one loop (12a, 12b) in which there is accommodated and made into an integral unit an inner ring system consisting of two metallic and coaxial sleeves (2, 6) for absorbing forces, and traversed by an axle for fixing to the hub or to the component for connection to the latter (23), characterised in that the two coaxial sleeves (2, 6) belong to a fastening device as claimed in one of Claims 1 to 4.

6. The blade as claimed in Claim 5, characterised in that the two sleeves (2, 6) of the fastening device (1) are integral with one another by affixing (22) of the inner sleeve (2) in the outer sleeve (6).

7. The blade as claimed in one of Claims 5 and 6, characterised in that the two sleeves (2, 6) are integral with one another in a relative axial position such that the axial end faces of the two sleeves (2, 6) are substantially coplanar and project in relation to the opposite faces of the root of the spar, at the location of the corresponding loop (12a, 12b), in such a manner as to form bearing faces against assembly pieces (25a, 25b) on the hub or on the component for connection to the latter (23).

8. The blade as claimed in one of Claims 5 to 7, characterised in that the outer sleeve (6) is integral, by its cylindrical outer lateral face (8), with the composite structure of the root of the spar (10).

9. The blade as claimed in Claim 8, characterised in that the part of the cylindrical outer lateral face (8) of the outer sleeve (6) extending between two annular parts of this face (8) which are adjacent the axial ends of this outer sleeve (6), is at least partially made integral with the opposite part of the bundle of filaments (13a or 13b) in its portion (12a or 12b) surrounding the outer sleeve (6), by means of a protection (20) affixed both to the outer sleeve (6) and to the bundle of filaments (13a or 13b).

10. The blade as claimed in Claim 9, characterised in that the bundle of filaments (13a, 13b) is formed of a plurality of bands (21) of unidirectional rovings agglomerated by an impregnation synthetic resin, the bands (21) being attached and agglomerated to one another by said polymerized impregnation resin which ensures at the same time the affixing of the attached bands (21) onto the protection (20) in the part of the corresponding loop (12a or 12b) which surrounds the outer sleeve (6).

11. The blade as claimed in one of Claims 8 to 10, characterised in that the part of the cylindrical outer lateral face (8) of the outer sleeve (6) extending between two annular parts of this face (8) which are adjacent the axial ends of this outer sleeve (6), is at least partially made integral with a filling core (14a or 14b) disposed between the two branches (15a, 16a or 15b, 16b) of the bundle of filaments (13a or 13b) forming the corresponding loop (12a or 12b), and which extend the part of this bundle surrounding the outer sleeve (6).

12. The blade as claimed in Claim 11, characterised in that the formation of a unit integral with said filling core (14a, 14b) is ensured by means of a protection (20) affixed both to the outer sleeve (6) and to the filling core (14a or 14b).

13. The blade as claimed in one of Claims 9, 10 and 12 characterised in that said protection (20) is annular and comprises at least one layer of fabrics of mineral and/or organic fibers having high mechanical strength, which is wound around the outer sleeve (6) and agglomerated by a polymerized impregnation synthetic resin ensuring at the same time the affixing of said protection (20) to the outer sleeve (6) and to the bundle of filaments (13a, 13b) and/or to the filling core (14a or 14b).

14. The blade as claimed in one of Claims 8 to 13, characterised in that each one of the two annular parts of the cylindrical outer lateral face (8) of the outer sleeve (6) which are adjacent the axial ends of this outer sleeve (6) is directly affixed by a polymerized synthetic resin to a covering (19) surrounding at least the root (10) of the spar and consisting of at least two layers, preferably crossed and inclined at substantially 45° in relation to the longitudinal direction of the spar, of fabrics of fibers impregnated and agglomerated by said polymerized resin.

## Ansprüche

1. Befestigungsvorrichtung mit Lastaufnahmebuchsen (2, 6), die zur Befestigung eines im wesentlichen aus Verbundwerkstoffen bestehenden Elementes (10) wie etwa eines Rotorblatts an einem Träger (23) wie etwa einer Rotornabe oder einem Element zur Verbindung mit der Rotornabe vorgesehen ist, wobei das Element (10) wenigstens ein Bündel (13a, 13b) von ununterbrochenen, mineralischen und/oder organischen, mechanisch hochwiderständigen und mittels eines polymerisierten Kunstharzes gebundenen Fasern aufweist, das wenigstens eine Schleife (12a, 12b) bildet und dazu vorgesehen ist, wenigstens großen Zugbeanspruchungen unterworfen zu werden, wobei die Vorrichtung (1) zwei koaxiale, metallische Buchsen (2, 6) aufweist, die dazu vorgesehen sind, in dieselbe Schleife (12a oder 12b) eingesetzt und von einem Bolzen zum Befestigen am Träger (23) durchsetzt zu werden, und dadurch gekennzeichnet ist, daß eine der zwei Buchsen eine Innenbuchse (2), die eine zylindrische Innenbohrung (4) für den Durchgang und die Abstützung des Befestigungsbolzens und eine kegelstumpfartige Außenseite (5) aufweist, und die andere Buchse eine Außenbuchse (6) ist, die von einem zum anderen ihrer axialen Enden geschlitzt (9) ist und eine zylindrische Außenseite (8), die zur Verbindung mit dem Element (10) aus Verbundwerkstoffen, in dessen Schleife (12a oder 12b) die Außenbuchse (6) eingesetzt wird, vorgesehen ist, und eine kegelstumpfartige Innenbohrung (7), die eine zu derjenigen der kegelstumpfartigen Außenseite (5) der Innenbuchse (2) komplementäre Form besitzt, aufweist, wobei die Innenbuchse (2) dazu vorgesehen ist, in axialer Richtung in die Außenbuchse (6) eingesteckt zu werden und mit der letzteren in einer axialen Position, die einer bestimmten radialen Ausdehnungsverformung der Außenbuchse (6) entspricht, verbunden wird.

2. Befestigungsvorrichtung gemäß Anspruch 1, dadurch gekennzeichnet, daß die Außenbuchse (6) einen einzigen Schlitz (9) aufweist, der sich im wesentlichen entlang einer ihrer Erzeugenden erstreckt.

3. Befestigungsvorrichtung gemäß einem der Ansprüche 1 bis 2, dadurch gekennzeichnet, daß die zwei Buchsen (2, 6) im wesentlichen die gleiche axiale Abmessung besitzen, die etwas größer als die Dicke des Elementes (10) aus Verbundwerkstoffen auf Höhe der entsprechenden Schleife (12a oder 12b) ist.

4. Befestigungsvorrichtung gemäß einem der Ansprüche 1 bis 3, dadurch gekennzeichnet, daß die zwei Buchsen (2, 6) dazu vorgesehen sind, durch Verkleben (22) der Innenbuchse (2) in der Außenbuchse (6), die bei der radialen Ausdehnung ist, miteinander verbunden zu werden.

5. Rotorblatt, insbesondere eines Luftfahrzeugs mit wenigstens teilweise drehbarem Tragflügel, etwa eines Hubschraubers, wobei das Blatt (10) im wesentlichen aus Verbundwerkstoffen besteht und ein widerstandsfähiges Gerippe besitzt, das wenigstens einen Hauptträger umfaßt, der wenigstens ein Bündel von ununterbrochenen, mineralischen oder organischen, mechanisch hochwiderständigen Fasern (13a, 13b), die mittels eines polymerisierten Kunstharzes gebunden sind, aufweist, wobei das Gerippe am Fußende (10) des Hauptträgers, durch den das Blatt an der Nabe (23) des Rotors oder an einem Element zur Verbindung mit der Nabe befestigt werden soll, wenigstens eine Schleife (12a, 12b) bildet, in die eine innere Buchsenanordnung, die aus zwei metallischen und koaxialen Lastaufnahmebuchsen (2, 6) gebildet wird und von einem Bolzen zur Befestigung an der Nabe oder am Element zur Verbindung mit dieser letzteren (23) durchsetzt wird, eingesetzt und mit ihr verbunden wird, dadurch gekennzeichnet, daß die zwei koaxialen Buchsen (2, 6) einer Befestigungsvorrichtung gemäß einem der Ansprüche 1 bis 4 zugehören.

6. Blatt gemäß Anspruch 5, dadurch gekennzeichnet, daß die zwei Buchsen (2, 6) der Befestigungsvorrichtung (1) durch Verklebung (22) der Innenbuchse (2) in der Außenbuchse (6) miteinander verbunden sind.

7. Blatt gemäß einem der Ansprüche 5 und 6, dadurch gekennzeichnet, daß die zwei Buchsen (2, 6) in einer gegenseitigen axialen Position miteinander verbunden sind, derart, daß die Stirnseiten der zwei Buchsen (2, 6) im wesentlichen koplanar sind und über gegenüberliegende Seiten des Hauptträger-Fußendes auf Höhe der entsprechenden Schleife (12a, 12b) hinausragen, um so an der Nabe oder am Element zur Verbindung mit dieser letzteren (23) Abstützflächen für Montageteile (25a, 25b) zu bilden.

8. Blatt gemäß einem der Ansprüche 5 bis 7, dadurch gekennzeichnet, daß die Außenbuchse (6) mit ihrer zylindrischen Außenseite (8) mit der Verbundstruktur des Hauptträger-Fußendes (10) verbunden ist.

9. Blatt gemäß Anspruch 8, dadurch gekennzeichnet, daß derjenige Teil der zylindrischen Außenseite (8) der Außenbuchse (6), der sich zwischen zwei ringförmigen Teilen dieser Seite (8), die an die axialen Enden dieser Außenbuchse (6) angrenzen, in seinem die Außenbuchse (6) umgebenden Bereich (12a oder 12b) über einen gleichzeitig mit der Außenbuchse (6) und dem Faserbündel (13a oder 13b) verklebten Schutz (20) mit dem dem Faserbündel (13a oder 13b) gegenüberliegenden Teil wenigstens teilweise verbunden ist.

10. Blatt gemäß Anspruch 9, dadurch gekennzeichnet, daß das Faserbündel (13a, 13b) von einer Mehrzahl von in einer Richtung verlaufenden Roving-Bändern (21) gebildet wird, die mittels eines Imprägnierungskunstharzes gebunden sind, wobei die Bänder (21) mittels des polymerisierten Imprägnierungsharzes, das gleichzeitig im entsprechenden Teil der Schleife (12a oder 12b), der die Außenbuchse (6) umgibt, die Verklebung der aneinandergefügten Bänder (21) am Schutz (20) gewährleistet, aneinandergefügt und -gebunden sind.

11. Blatt gemäß einem der Ansprüche 8 bis 10, dadurch gekennzeichnet, daß derjenige Teil der zylindrischen Außenseite (8) der Außenbuchse (6), der sich zwischen zwei ringförmigen Teilen dieser Seite (8), die an die axialen Enden dieser Außenbuchse (6) angrenzen, erstreckt, wenigstens teilweise mit einem Füllkern (14a oder 14b) verbunden ist, der zwischen den zwei Schenkeln (15a, 16a oder 15b, 16b) des die entsprechende Schleife (12a oder 12b) bildenden Faserbündels (13a oder 13b), die den die Außenbuchse (6) umgebenden Teil des Bündels verlängern, angeordnet ist.

12. Blatt gemäß Anspruch 11, dadurch gekennzeichnet, daß die Verbindung mit dem Füllkern (14a, 14b) über einen gleichzeitig mit der Außenbuchse (6) und mit dem Füllkern (14a oder 14b) verklebten Schutz (20) gewährleistet wird.

13. Blatt gemäß einem der Ansprüche 9, 10 und 12, dadurch gekennzeichnet, daß der Schutz (20) ringförmig ist und wenigstens eine Gewebeschicht aus mineralischen und/oder organischen Fasern mit hohem mechanischen Widerstand umfaßt, die um die Außenbusche (6) gebunden und mittels eines polymerisierten Imprägnierungs-Kunstharzes, das gleichzeitig die Verklebung des Schutzes (20) mit der Außenbuchse (6) und dem Faserbündel (13a, 13b) und/oder dem Füllkern (14a oder 14b) gewährleistet, gebunden ist.

14. Blatt gemäß einem der Ansprüche 8 bis 13, dadurch gekennzeichnet, daß jeder der ringförmigen Teile der zylindrischen Außenseite (8) der Außenbuchse (6), die an die axialen Enden dieser Außenbuchse (6) angrenzen, direkt mittels eines polymerisierten Kunstharzes mit einer wenigstens das Fußende (10) des Hauptträgers umgebenden Auskleidung (19) verklebt ist und wenigstens von zwei Schichten aus imprägnierten Fasergeweben, die mittels des polymerisierten Harzes gebunden sind, gebildet wird, wobei die zwei Schichten vorzugsweise gekreuzt und im wesentlichen um 45° gegen die Längsrichtung des Hauptträgers geneigt sind.

FIG.1

FIG.2